(19) Europäisches Patentamt / European Patent Office / Office européen des brevets

(11) **EP 3 479 059 B1**

(12) **EUROPÄISCHE PATENTSCHRIFT**

(45) Veröffentlichungstag und Bekanntmachung des Hinweises auf die Patenterteilung:
**28.08.2024   Patentblatt 2024/35**

(21) Anmeldenummer: **18752414.5**

(22) Anmeldetag: **18.05.2018**

(51) Internationale Patentklassifikation (IPC):
**G01B 11/25** (2006.01)   **H04N 13/00** (2018.01)
**G03B 21/00** (2006.01)

(52) Gemeinsame Patentklassifikation (CPC):
**G01B 11/25; H04N 23/71; H04N 23/76**

(86) Internationale Anmeldenummer:
**PCT/DE2018/200050**

(87) Internationale Veröffentlichungsnummer:
**WO 2019/007468 (10.01.2019 Gazette 2019/02)**

(54) **VERFAHREN UND VORRICHTUNG ZUR OPTISCHEN OBERFLÄCHENVERMESSUNG EINES MESSOBJEKTES**

METHOD AND DEVICE FOR OPTICALLY MEASURING THE SURFACE OF A MEASUREMENT OBJECT

PROCÉDÉ ET DISPOSITIF DE MESURE DE SURFACE OPTIQUE D'UN OBJET À MESURER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.07.2017   DE 102017211377**

(43) Veröffentlichungstag der Anmeldung:
**08.05.2019   Patentblatt 2019/19**

(73) Patentinhaber: **Micro-Epsilon Messtechnik GmbH & Co. KG**
**94496 Ortenburg (DE)**

(72) Erfinder:
- **LOFERER, Hannes**
  **94496 Ortenburg (DE)**
- **KICKINGEREDER, Reiner**
  **94496 Ortenburg (DE)**
- **REITBERGER, Josef**
  **94269 Rinchnach (DE)**
- **HESSE, Rainer**
  **94496 Ortenburg (DE)**
- **WAGNER, Robert**
  **94127 Neuburg am Inn (DE)**

(74) Vertreter: **Ullrich & Naumann PartG mbB**
**Schneidmühlstrasse 21**
**69115 Heidelberg (DE)**

(56) Entgegenhaltungen:
**US-B1- 6 256 010**

- **LIU MIAO ET AL: "An accurate projector gamma correction method for phase-measuring profilometry based on direct optical power detection", VISUAL COMMUNICATIONS AND IMAGE PROCESSING; 20-1-2004 - 20-1-2004; SAN JOSE,, vol. 9677, 8 October 2015 (2015-10-08), pages 96771D - 96771D, XP060058740, ISBN: 978-1-62841-730-2, DOI: 10.1117/12.2199669**
- **MEILING DAI ET AL: "Single-shot color fringe projection for three-dimensional shape measurement of objects with discontinuities", APPLIED OPTICS, OPTICAL SOCIETY OF AMERICA, WASHINGTON, DC; US, vol. 51, no. 12, 20 April 2012 (2012-04-20), pages 2062 - 2069, XP001574792, ISSN: 0003-6935, [retrieved on 20120418], DOI: 10.1364/AO.51.002062**
- **THANG HOANG ET AL: "Generic gamma correction for accuracy enhancement in fringe-projection profilometry", OPTICS LETTERS, OPTICAL SOCIETY OF AMERICA, US, vol. 35, no. 12, 15 June 2010 (2010-06-15), pages 1992 - 1994, XP001554837, ISSN: 0146-9592, DOI: 10.1364/OL.35.001992**

EP 3 479 059 B1

**Beschreibung**

Die vorliegende Erfindung betrifft ein Verfahren zur optischen Oberflächenvermessung eines Messobjektes, wobei mit einer Bilderzeugungseinrichtung ein Bildmusters dargestellt und das Messobjekt mit diesem erzeugten Bildmuster bestrahlt wird und wobei das von dem Messobjekt durch Reflexion, Streuung, Beugung und/oder Transmission beeinflusste Bildmuster mit einer Erfassungseinrichtung aufgenommen wird. Des Weiteren betrifft die vorliegende Erfindung eine Vorrichtung zur Durchführung des erfindungsgemäßen Verfahrens, umfassend eine Bilderzeugungseinrichtung zur Darstellung eines Bildmusters und eine Erfassungseinrichtung zur Aufnahme des von dem Messobjekt durch Reflexion, Streuung, Beugung oder Transmission beeinflussten Bildmusters.

Bei der optischen Oberflächenvermessung werden häufig Methoden der Bildverarbeitung sowie entsprechende Vorrichtungen eingesetzt, bei denen ein Bildmuster von der Oberfläche beeinflusst und das beeinflusste Bildmuster mit einer Kamera aufgenommen wird. Das Bildmuster wird beispielsweise über einen beleuchteten Schirm, über einen Projektor oder mit Hilfe eines Monitors (Display) erzeugt bzw. dargestellt und die zu untersuchende Oberfläche mit dem Bildmuster bestrahlt. Das Bildmuster wird durch die zu untersuchenden Oberfläche durch Reflexion, Streuung, Beugung oder Transmission beeinflusst, wobei das beeinflusste Bildmuster mit einer Kamera aufgenommen wird. Die aufgenommenen, beeinflussten Bildmuster werden anschließend mit einem Rechner ausgewertet und daraus Messergebnisse berechnet. Aus den bekannten Mustereigenschaften kann aus dem durch die Oberfläche des Messobjektes veränderten bzw. beeinflussten Bildmuster auf die Eigenschaften der Oberfläche geschlossen werden. Häufig zu untersuchende Oberflächeneigenschaften sind Form, Geometrie, Fehler, Defekte oder Textur etc.

Bekannte Messmethoden zur Oberflächeninspektion sind z.B. die Moiré-Technik, die Streifenprojektion oder die Deflektometrie. Zur Musterdarstellung werden häufig handelsübliche Projektoren (LCD-Beamer) oder Computer- bzw. Fernsehmonitore eingesetzt. Diese sind vorwiegend für die Verwendung im Consumerbereich konzipiert und für die Betrachtung mit dem menschlichen Auge ausgelegt. Das Auge kompensiert viele objektive Fehler eines Monitors unbewusst, so dass ein korrekter Bildeindruck entsteht. Kameras hingegen nehmen Grau- oder Farbwerte auf, so dass objektive Fehler, zum Beispiel eines Monitors, auch auf den resultierenden Bildern enthalten sind.

Ein grundsätzliches Problem bei der messtechnischen Bildverarbeitung entsteht durch eine zeitliche Veränderung der Helligkeit der Bilder, sowie durch eine örtliche Veränderung der Helligkeit der Bilder. Dies kann bei nachgelagerten Algorithmen der Bildverarbeitung zu Artefakten führen, die die Messergebnisse verfälschen. Weiterhin kann dies zu einer Über- oder Unterbelichtung von Bildern oder Bildbereichen führen, die Messungen unbrauchbar machen können.

Die Helligkeitsabweichungen können verschiedene Ursachen haben. Ein Problem besteht darin, dass Projektoren und Monitore auf das menschliche Auge ausgelegt sind, nicht jedoch auf eine Kamera. Das menschliche Auge weist ein Gamma von ca. 0,3 bis 0,5 auf, so dass das Gamma eines Monitors bei 2,2 (Windows) bzw. 1,8 (Mac) liegt. Kameras für die Bildverarbeitung weisen in der Regel eine lineare Gammakorrektur auf, d.h. Gamma = 1. Dies führt dazu, dass die Helligkeitswerte auf den resultierenden Bildern nicht linear sind und somit für exakte Messtechnik nicht brauchbar sind. Verfahren für Gamma-Korrektur der Projektoren sind zum Beispiel aus den folgenden Dokumenten bekannt: L. Miao et al: "An accurate projector gamma correction method for phase-measuring profilometry based on direct optical power detection", VISUAL COMMUNICATIONS AND IMAGE PROCESSING, (2015-10-08), Seiten 96771D-96771D, M. Dai et al: "Single-shot color fringe projection for three-dimensional shape measurement of objects with discontinuities", APPLIED OPTICS, OPTICAL SOCIETY OF AMERICA, Nr. 12 (2012-04-20), Seiten 2062-2069 oder T. Hoang et al: "Generic gamma correction for accuracy enhancement in fringe-projection profilometry", OPTICS LETTERS Nr. 12 (2010-06-15), Seiten 1992-1994.

Ein weiterer Grund für die Helligkeitsabweichungen ist die inhomogene FlächenHelligkeit des Monitors, da sie von dem verwendeten Backlight abhängt (Edge-LED, Full-LED, Edge-Kaltkathode, etc.). Dies führt dazu, dass der Monitor in der Mitte meist heller ist als am Rand, wodurch Helligkeitsabweichungen im Bild entstehen, je nachdem, wo der Sichtstrahl der Kamera auf den Monitor trifft.

Ein weiteres Problem besteht darin, dass die Abstrahlcharakteristik von Monitoren auf eine weitgehend frontale Betrachtung durch eine Person ausgelegt ist. Bei der Oberflächeninspektion ist jedoch meist eine seitliche Betrachtung notwendig, da der Monitor nur indirekt über die zu untersuchende Oberfläche betrachtet wird (bei der Deflektometrie an spiegelnden Oberflächen gilt z.B. Einfallswinkel = Ausfallswinkel). Dies führt zu Helligkeitsabweichungen je nach Blickwinkel.

Weitere Nachteile entstehen bei der Oberflächeninspektion, wenn veränderliche Bildmuster verwendet werden, z. B. Schwarz-Weiß-Muster mit unterschiedlicher Anordnung (z. B. wechselnde Grey-Codes), oder Graustufenmuster mit unterschiedlichen Phasen oder Amplituden. Dies führt dazu, dass sich beim Wechsel von einem Bildmuster auf das nächste die Gesamthelligkeit (Flächenhelligkeit) des Monitors ändert und damit auch die von der Kamera aufgenommene Helligkeit. Die Kamera muss dann so eingestellt werden, dass sie nicht übersteuert. Ein weiterer Nachteil ist, dass sich aufgrund wechselnder Bildmuster die Helligkeit innerhalb des Bildes ändert, was zu Artefakten in der Bildauswertung führen kann ("Sonnenstand").

Der vorliegenden Erfindung liegt daher die Aufgabe zugrunde, ein Verfahren und eine Vorrichtung der eingangs genannten Art derart auszugestalten und weiterzubilden, dass auf einfache Weise eine präzise Oberflächenvermessung möglich ist.

Erfindungsgemäß wird die voranstehende Aufgabe durch die Merkmale des Anspruches 1 gelöst. Danach ist das in Rede stehende Verfahren dadurch gekennzeichnet, dass mittels einer Korrekturfunktion die Bilderzeugungseinrichtung und somit das dargestellte Bildmuster derart angepasst wird, dass das von der Erfassungseinrichtung aufgenommene, beeinflusste Bildmuster zeitlich und/oder örtlich eine zumindest im Wesentlichen konstante und/oder homogene und/oder lineare Helligkeit aufweist.

In erfindungsgemäßer Weise ist zunächst erkannt worden, dass die zugrunde liegende Aufgabe gelöst werden kann, indem gezielt Einfluss auf die zeitliche und/oder örtliche Helligkeit des von der Bilderzeugungseinrichtung erzeugten bzw. dargestellten Bildmuster genommen wird. Im Konkreten wird hierzu mittels einer Korrekturfunktion das von der Bilderzeugungseinrichtung darzustellende bzw. dargestellte Bildmuster angepasst. Dadurch können Artefakte in der nachfolgenden Bildbearbeitung verhindert, zumindest aber verringert werden.

An dieser Stelle wird darauf hingewiesen, dass unter dem "dargestellten Bildmuster" das von der Bilderzeugungseinrichtung dargestellte Bildmuster zu verstehen ist, mit welchem die zu untersuchende Oberfläche bestrahlt wird. Bei dem "beeinflussten Bildmuster" handelt es sich um das von dem Messobjekt durch Reflexion, Streuung, Beugung oder Transmission veränderte bzw. beeinflusste Bildmuster.

In vorteilhafter Weise wird mittels der Korrekturfunktion die Gammakorrektur bzw. das Gamma der Bilderzeugungseinrichtung an die Gammakorrektur bzw. das Gamma der Erfassungseinrichtung angepasst. Hierbei ist erkannt worden, dass Bilderzeugungseinrichtungen oft eine Voreinstellung aufweisen, die für die Erfassungseinrichtung ungeeignet ist. Beispielsweise ist die Helligkeit ab Werk so eingestellt, dass für das menschliche Auge die Helligkeit von Dunkel zu Hell nahezu linear ansteigt. Durch die sog. Gammakorrektur wird das Gamma des menschlichen Auges (im Bereich 0,3...0,5) in der Bilderzeugungseinrichtung überkompensiert, indem ein höherer Gammawert eingestellt wird, wodurch dann ein linearer Helligkeitseindruck erzeugt wird. Allerdings haben Erfassungseinrichtungen wie zum Beispiel Kameras für die Bildverarbeitung schon ein annähernd lineares Ansprechverhalten (Gamma =1), so dass die von der Erfassungseinrichtung aufgenommenen Bildmuster einen nichtlinearen Helligkeitsverlauf aufweisen. Dies führt dazu, dass Berechnungen auf Basis der Grauwerte zu einem fehlerbehafteten Ergebnis führen, beispielsweise bei einer Mittelwertbildung ohne Berücksichtigung des nichtlinearen Verlaufs. Durch die Anpassung der Gammakorrektur bzw. des Gammas der Bilderzeugungseinrichtung an die Gammakorrektur bzw. das Gamma der Erfassungseinrichtung wird ein korrekter Verlauf der Grauwerte erreicht.

In besonders vorteilhafter Weise kann mittels der Korrekturfunktion eine inhomogene Helligkeitsverteilung der Bilderzeugungseinrichtung korrigiert werden. Bei Bilderzeugungseinrichtungen, insbesondere Monitoren, gibt es verschiedene Typen von Hintergrundbeleuchtung: vollflächige LED-Panel, bzw. Kaltkathodenstrahler oder LEDs an den Seitenkanten (Edge-LED). Das Licht wird mit lichtleitenden Kunststoffpanels möglichst homogen über die Monitorfläche verteilt. Die Verteilung ist jedoch nicht ideal, so dass es Stellen mit höherer und niedrigerer Helligkeit gibt. Diese Helligkeitsunterschiede können gemessen werden, woraus eine Korrekturfunktion ermittelbar ist.

Gemäß einer weiteren vorteilhaften Ausgestaltung können mittels der Korrekturfunktion durch seitliche Sichtstrahlen hervorgerufene Inhomogenitäten des Bildmusters korrigiert werden. In der Regel sind Bilderzeugungseinrichtungen, insbesondere Monitore, derart ausgelegt, dass die Betrachtung zentral von vorne erfolgt. Die Helligkeitsverteilung entspricht somit einer Emission nach vorne. Bei messtechnischen Anwendungen ist dieses Kriterium oft nicht erfüllt, da aufgrund der aus der perspektivischen Abbildung resultierenden Dreiecksanordnung zwischen Bilderzeugungseinrichtung, Messobjekt und Erfassungseinrichtung auch seitliche Sichtstrahlen möglich sind. Damit ist der von der Erfassungseinrichtung aufgenommene Helligkeitseindruck auch von der Blickrichtung abhängig. Bei bekannter Anordnung von Bilderzeugungseinrichtung, Messobjekt und Bilderfassungseinrichtung kann die Helligkeit mit einer Korrekturfunktion an die - ggf. auch wechselnde - geometrische Anordnung angepasst werden.

Des Weiteren ist denkbar, dass mittels der Korrekturfunktion die Grauwertverteilung und/oder Farbverteilung einer Serie von mehreren nacheinander dargestellten Bildmustern derart angepasst wird, dass die Bildmuster jeweils zumindest im Wesentlichen eine gleiche Gesamthelligkeit aufweisen. Mit anderen Worten kann die Korrekturfunktion die Helligkeit einzelner Bilder je nach Bildinhalt korrigieren. Bei hellen Bildern (das sind Bilder mit hohem Weißanteil im Muster, z.B. Greycode mit vielen Weiß-Blöcken, oder Sinusmuster mit einer unterschiedlichen Anzahl von Maxima und Minima im Bild) können die Graustufen derart korrigiert werden, dass aufeinanderfolgende Bilder die gleiche Gesamthelligkeit aufweisen.

Gemäß einer weiteren vorteilhaften Ausgestaltung kann mittels der Korrekturfunktion die geometrische Anordnung des Bildmusters auf bzw. an der Bilderzeugungseinrichtung angepasst werden. So kann beispielsweise die Breite eines sinusförmigen Bildmusters an die Monitorbreite angepasst werden, so dass bei wechselnden sinusförmigen Bildmustern die Gesamthelligkeit zumindest nahezu konstant bleibt.

Es wird ausdrücklich darauf hingewiesen, dass es sich bei der Korrekturfunktion nicht zwangsweise um eine mathematische Funktion handeln muss. Beispielsweise kann als Korrekturfunktion eine Lookup-Tabelle verwendet werden. Mit einer derartigen Tabelle werden Eingangswerte auf Ausgangswerte abgebildet, so dass in Abhängigkeit vom Eingang korrigierte Ausgangswerte erzeugt werden. Die Korrekturfunktion kann des Weiteren von den physikalischen Eigenschaften der Bilderzeugungseinrichtung abhängen. Beispielsweise wird das interne Gamma eines Monitors üblicherweise durch eine Lookup-Tabelle (LUT) in der Firmware realisiert. Die Firmware stellt Grauwerte am Monitor so dar, dass das Signal von einem Rechner mit Werten aus der LUT verrechnet wird, um einen gewünschten Helligkeitseindruck zu erzielen. Eine Korrekturfunktion kann beispielsweise als korrigierte LUT in der Monitor-Firmware ausgestaltet sein, so dass ein linearer Grauwertverlauf erreicht wird.

Zusätzlich kann die Korrekturfunktion von der (bauartbedingten) Helligkeitsverteilung der Bilderzeugungseinrichtung abhängen. So kann z. B. die Mittenhelligkeit der Bilderzeugungseinrichtung abgeschwächt werden durch eine ortsabhängige Korrekturfunktion, beispielsweise ein Korrekturpolynom bzw. Polynom n-ten Grades. In einem solchen Fall handelt es sich bei der Korrekturfunktion somit um eine mathematische Funktion. Die von der Bilderzeugungseinrichtung dargestellten Bilder können am Rand aufgehellt werden und in der Mitte abgedunkelt werden, so dass die Bildmusterdarstellung eine über die Fläche der Bilderzeugungseinrichtung, beispielweise eines Monitors, homogene Verteilung aufweist.

Mit anderen Worten ist denkbar, dass die Korrekturfunktion durch eine - beliebige - mathematische Funktion gebildet wird, die abhängig von Eingangswerten modifizierte Ausgangswerte liefert und der ggf. eine lineare Funktion überlagert wird. Die mathematische Funktion kann eine räumlich und/oder zeitlich veränderliche Funktion sein. Mit einer räumlichen Funktion lassen sich beispielsweise die Helligkeitsabweichungen innerhalb eines an der Bilderzeugungseinrichtung dargestellten Bildes in eine oder in zwei Richtungen - d.h. eindimensional oder zweidimensional (flächig) - verändern. Mit einer zeitlich veränderlichen Funktion lassen sich Helligkeitsänderungen in aufeinanderfolgenden Bildern anpassen. Gemäß einer vorteilhaften Ausgestaltung kann die Korrekturfunktion räumlich in ein oder in zwei Achsen wirken und/oder zeitlich variieren.

In besonders vorteilhafter Weise weist die Bilderzeugungseinrichtung einen Projektor, einen Monitor oder einen Schirm zur Darstellung des Bildmusters auf und/oder weist die Erfassungseinrichtung eine Kamera zur Erfassung des beeinflussten Bildmusters auf.

Die in Rede stehende Aufgabe wird des Weiteren durch die Merkmale von Anspruch 11 gelöst.

Es wird darauf hingewiesen, dass die zuvor erörterten Merkmale zu dem erfindungsgemäßen Verfahren auch eine vorrichtungsgemäße Ausprägung haben können. Eine Kombination dieser Merkmale mit den den Vorrichtungsanspruch betreffenden Merkmalen ist nicht nur möglich, sondern von Vorteil und ausdrücklich Teil der Offenbarung.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen

Fig. 1 in einer schematischen Darstellung ein Ausführungsbeispiel einer erfindungsgemäßen Vorrichtung zur Durchführung des erfindungsgemäßen Verfahrens,

Fig. 2 die Aufnahme eines auf ein Messobjekt projizierten Bildmusters,

Fig. 3 ein aus der Aufnahme gemäß Fig. 2 berechnetes Krümmungsbild,

Fig. 4 die Helligkeitsverteilung eines als Bilderzeugungseinrichtung dienenden Monitors,

Fig. 5 eine Korrekturfunktion für die Helligkeitsverteilung gemäß Fig. 4,

Fig. 6 das sinusförmige Bildmuster, das sich über die Fläche eines als Bildererzeugungseinrichtung dienenden Monitors erstreckt,

Fig. 7 das durch die Korrekturfunktion gemäß Fig. 5 veränderte sinusförmige Bildmuster aus Fig. 6,

Fig. 8 ein durch das erfindungsgemäße Verfahren optimiertes Krümmungsbild,

Fig. 9 eine sinusförmige Intensitätsverteilung über die Breite eines als Bilderzeugungseinrichtung dienenden Monitors,

Fig. 10 eine nicht angepasste Intensitätsverteilung über die Breite eines als Bilderzeugungseinrichtung dienenden Monitors,

Fig. 11    vier nicht auf die Breite eines als Bilderzeugungseinrichtung dienenden Monitors angepasste sinusförmige Intensitätsverteilungen nach Reflexion an der Oberfläche eines Messobjektes,

Fig. 12    beispielhaft die aus Fig. 11 resultierende Intensität in einem Modulationsbild,

Fig. 13    beispielhaft die aus Fig. 12 resultierende Intensität in einem Amplitudenbild, und

Fig. 14    das Gamma eines handelsüblichen Monitors sowie eine geeignet gewählte Korrekturfunktion.

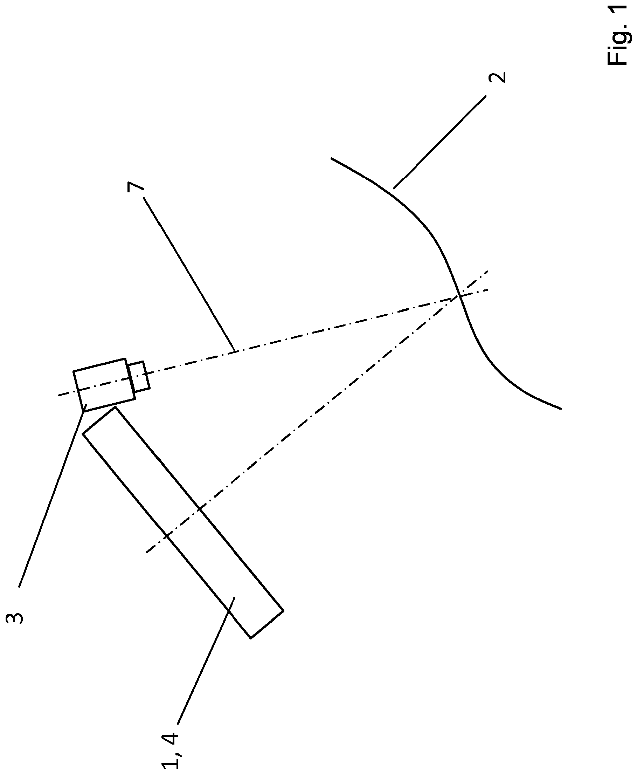

Fig. 1 zeigt in einer schematischen Ansicht einen beispielhaften Aufbau einer erfindungsgemäßen Vorrichtung zur Durchführung des erfindungsgemäßen Verfahrens. Die Vorrichtung umfasst eine Bilderzeugungseinrichtung 1, beispielsweise einen Monitor. Die Bilderzeugungseinrichtung 1 stellt ein Bildmuster dar, das auf ein Messobjekt 2 gestrahlt wird. Bei dem Messobjekt 2 kann es sich beispielsweise um ein lackiertes Kraftfahrzeug handeln, dessen Oberfläche optisch vermessen werden soll. Des Weiteren umfasst die Vorrichtung eine Erfassungseinrichtung 3, insbesondere eine Kamera, deren Sichtstrahl 7 in Fig. 1 dargestellt ist. Die Erfassungseinrichtung 3 nimmt das an dem Messobjekt 2 durch Reflexion, Streuung, Beugung und/oder Transmission beeinflusste Bildmuster auf. Um das auf das Messobjekt projizierte Bildmuster zu optimieren, umfasst die Bilderzeugungseinrichtung 1 eine Korrektureinheit 4.

Als Eingangsdaten benötigt die optische Oberflächenvermessung, beispielsweise die phasenschiebende Deflektometrie, Aufnahmen von auf einer Bilderzeugungseinrichtung 1, beispielsweise einem Monitor, dargestellten Bildmustern mit beispielsweise sinusförmig ausgeprägten Streifen, die sich in der Oberfläche des zu inspizierenden Messobjekts 2 spiegeln. Für jedes Pixel einer als Erfassungseinrichtung 3 dienenden Kamera wird aus den aufgenommenen, beeinflussten Bildermustern die Amplitude und Phasenlage des dargestellten Sinusmusters berechnet. Je ausgeprägter die Amplitude der Sinusschwingung in den aufgenommenen Bildmustern ist, desto stabilere Ergebnisse liefern die Berechnungen; ein schwach ausgeprägtes Signal führt zu erhöhtem Messrauschen.

Grundsätzlich kann ein schwach ausgeprägtes Signal durch Veränderung der Aufnahmeparameter (u.a. Belichtungszeit) optimiert werden. Jedoch müssen die Aufnahmeparameter so gewählt werden, dass keine Überschreitung des dynamischen Bereichs der Kamera 3 auftritt. Üblicherweise liefern Kameras 3 Grauwerte im Bereich von 0-255 Graustufen. Keinesfalls darf innerhalb der auszuwertenden Fläche der Wert von 255 überschritten werden. Diese Übersättigung würde dazu führen, dass die Sinuswelle gekappt und damit deren Phasenlage nicht mehr eindeutig bestimmt werden kann.

Im idealen Fall deckt ein aufgenommenes Sinusmuster den vollen Bereich von 0-255 ab. Dies ist in der Praxis aus den folgenden Gründen nicht möglich:

-    Durch einen von der untersuchten Oberfläche des Messobjekts 2 abhängigen Anteil an diffuser Reflexion wird das dargestellte Sinusmuster nicht nur direkt reflektiert. Vielmehr ergibt sich hier ein unterer Grauwert, der aus einer flächigen Mittelung der abgestrahlten Helligkeitsmenge des Monitors 1 besteht.

-    Im Betrieb muss mit Streuungen in den aufgenommenen, beeinflussten Bildmustern gerechnet werden. Deshalb muss bei der Einrichtung der Vorrichtung darauf geachtet werden, dass immer entsprechender Spielraum nach oben vorgesehen ist.

-    Um den Einrichteaufwand gering zu halten, ist es vorteilhaft, die für die vollständige Abdeckung eines Fahrzeugs als Messobjekt 2 notwendigen Messpositionen mit den gleichen Parametern aufzunehmen. Die unterschiedliche Fahrzeuggeometrie an den einzelnen Positionen beeinflusst ebenfalls die Intensität der aufgenommenen Bildmuster und muss entsprechend berücksichtigt werden.

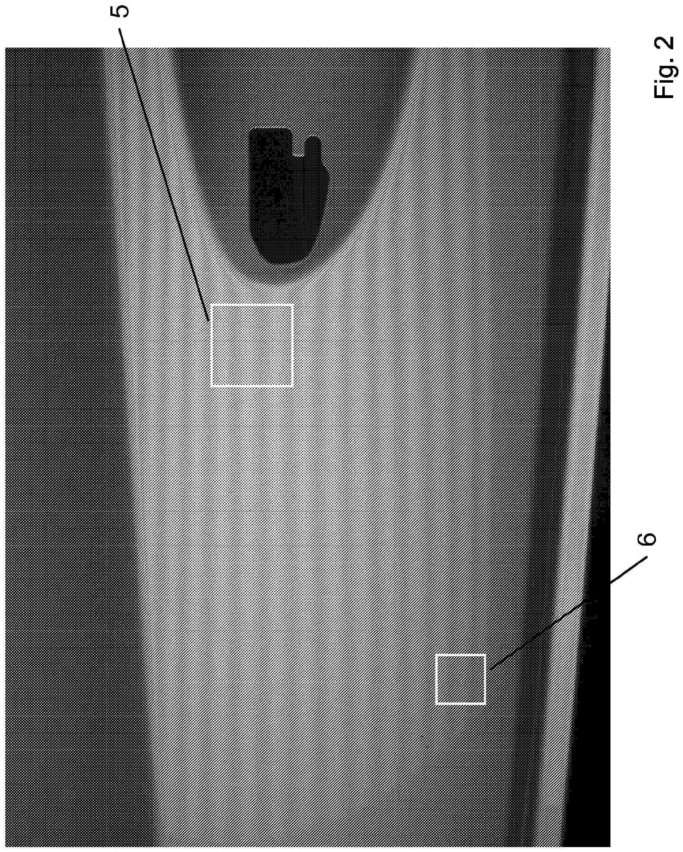

Fig. 2 zeigt die Aufnahme der Spiegelung eines Streifenmusters als beeinflusstes Bildmuster am Beispiel eines Ausschnittes der lackierten Tür eines Kraftfahrzeuges im Bereich der Griffmulde. In diesem Beispiel sind die Aufnahmeparameter korrekt eingestellt. Jedoch sind die Unterschiede im Kontrast des Sinusmusters in einzelnen Bereichen des aufgenommenen Bildmusters deutlich zu sehen. Der erste Bereich 5 zeigt dabei den hellsten Bereich des aufgenommenen Bildmusters mit folgenden Eigenschaften:

-    Keine Sättigung des aufgenommenen Bildmusters, d.h. alle Grauwerte <200, d.h. genügend Spielraum nach oben zur Grenze von 255.

-    Dunkelste Pixel bei ca. 130 Grauwerten, d.h. der Sinus wird mit einer Amplitude von 70 Grauwerten dargestellt. Dies ist ausreichend.

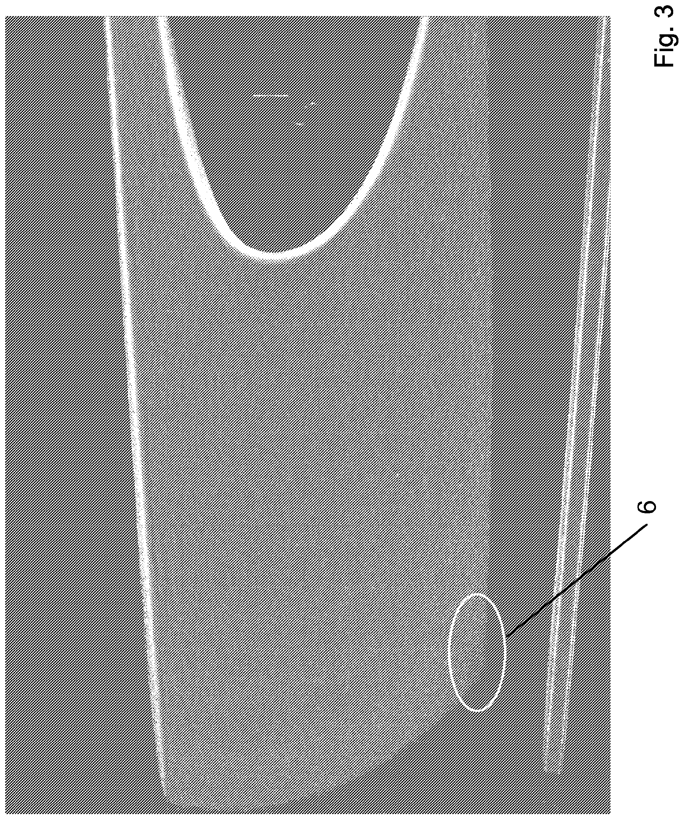

Im zweiten Bereich 6 dagegen haben die Sinusstreifen keinen ausreichenden Kontrast mehr. Dies führt zu Rauschen im berechneten Krümmungsbild. Fig. 3 zeigt das Krümmungsbild des Türausschnitts aus Fig. 2 mit dem markierten zweiten Bereich 6 aus Fig. 2. An dieser Stelle fällt die Helligkeit gegenüber dem Rest der Fläche deutlich ab.

Als Ursache für diesen Abfall der Helligkeiten kann die Oberfläche des Messobjektes 2 an sich ausgeschlossen werden. Diese ist einheitlich lackiert und überall gleich reflektierend. Vielmehr sind hier im Wesentlichen die folgenden Faktoren anzusetzen:

- Ungleichmäßige Helligkeitsverteilung des als Bilderzeugungseinrichtung 1 verwendeten Monitors: Übliche Monitore 1 zeigen am Rand gegenüber der Mitte einen Helligkeitsabfall von 20-50%.

- Winkelabhängigkeit der Helligkeitsabstrahlung des Monitors 1: Je flacher der Sichtstrahl 7 der als Erfassungseinrichtung 3 dienenden Kamera 3 auf den Monitor 1 trifft, desto weniger Intensität kann von der Kamera 3 aufgenommen werden.

Wenn man die in den Fig. 2 und 3 eingezeichneten Bereiche 5, 6 miteinander vergleicht, so führt eine Kombination beider Phänomene zum beobachteten Helligkeitsabfall:

Bereich 1:

- Kamera 3 sieht Spiegelung des zentralen Bereichs des Monitors 1 mit der höchsten Intensität an abgestrahltem Licht.
- Sichtstrahlen 7 der Kamera 3 fallen relativ senkrecht auf den Monitor 1 ein.

Bereich 2:

- Kamera 3 sieht Spiegelung einer der Ecken des Monitors 1 mit entsprechend reduzierter Intensität.

- Sichtstrahlen 7 der Kamera 3 treffen relativ flach auf dem Monitor auf.

Durch das erfindungsgemäße Verfahren und die erfindungsgemäße Vorrichtung wird die Aufnahmesituation derart optimiert, dass das aufgenommene, beeinflusste Bildmuster eine homogenere Helligkeitsverteilung aufweist.

Die Grundidee der Lösung besteht darin, das auf dem Monitor 1 dargestellte Sinusmuster so zu modifizieren, dass die o.g. Effekte minimiert werden. Für die Aufnahme des Bildes aus Fig. 2 werden die Sinusmuster für alle Pixel des Monitors 1 mit der maximal zur Verfügung stehenden Amplitude von 0 bis 255 Graustufen dargestellt. Wie bereits erwähnt sind jedoch in der Aufnahme nur noch Graustufen zwischen 130 und 200 enthalten. Dies liegt unter anderem auch an der diffusen Reflexion der Oberfläche, weshalb kein reines Schwarz mit Graustufe nahe oder gleich Null vorhanden ist. Zur Verbesserung der Aufnahmen werden in erfindungsgemäße Weise daher die Sinuswerte mit einem Korrekturwert multipliziert um die unterschiedlichen lokalen Helligkeiten des Monitors 1 auszugleichen:

- Ecken des Monitors 1:

  o sind am dunkelsten,
  o der volle Bereich von 0-255 muss ausgenutzt werden, d.h. Faktor 1.

- Mitte des Monitors 1:

  o ist am hellsten (z.B. 100% heller als die Ecken),
  o Multiplikation der Sinuswerte mit Faktor 0,5,
  o der Bereich zwischen 0-127 wird ausgenutzt.

Durch die Absenkung der Helligkeit in der Monitormitte kann die Belichtungszeit ohne Gefahr der Übersättigung erhöht werden, dadurch erhöht sich der aufgenommene Kontrast an den Monitorecken.

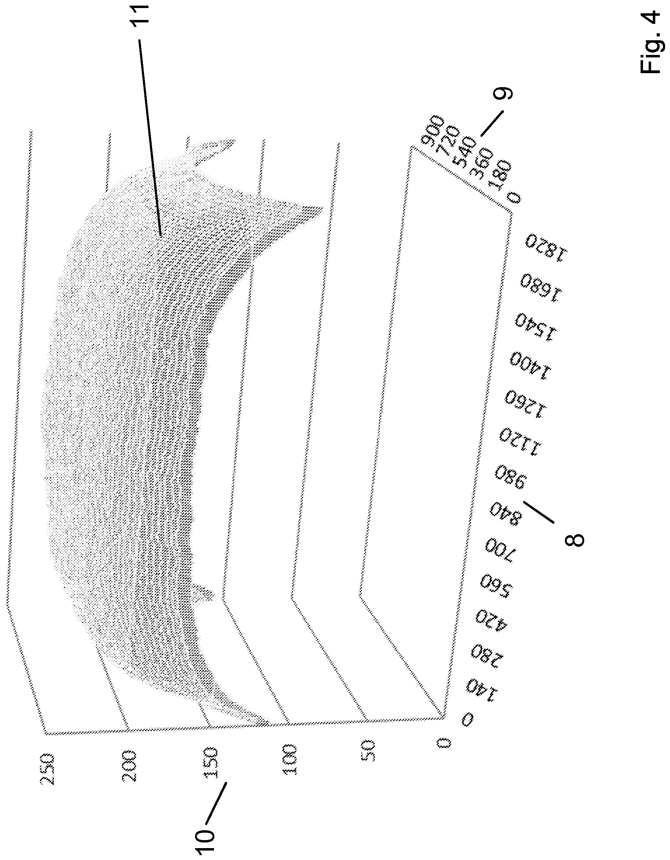

Zunächst wird aus Aufnahmen von am Monitor 1 dargestellten weißen Bildern die Form der Helligkeitsverteilung ermittelt. Fig. 4 zeigt die Graustufen eines Monitors 1 in Abhängigkeit der Position auf dem Monitor 1. Dargestellt ist ein Monitor 1 mit 1900 Pixeln in der Breite 8 und 1080 Pixeln in der Höhe 9. Die z-Achse 10 der Fig. 4 zeigt die Graustufen 11, die im Bereich von ca. 110 bis 230 liegen. In der Mitte ist der Monitor 1 am hellsten, während die Helligkeit zu den Ecken stark abfällt.

Daraus kann ein zweidimensionales Korrekturpolynom als Korrekturfunktion bestimmt werden, mit der der benötigte Faktor für jedes dargestellte Pixel berechnet werden kann. Die Gleichung der Korrekturfläche hängt vom jeweilig eingesetzten Monitortyp ab. Als günstig haben sich in der Praxis Polynome bis zum Grad 4 mit ausgeprägter Symmetrie in beiden Richtungen erwiesen.

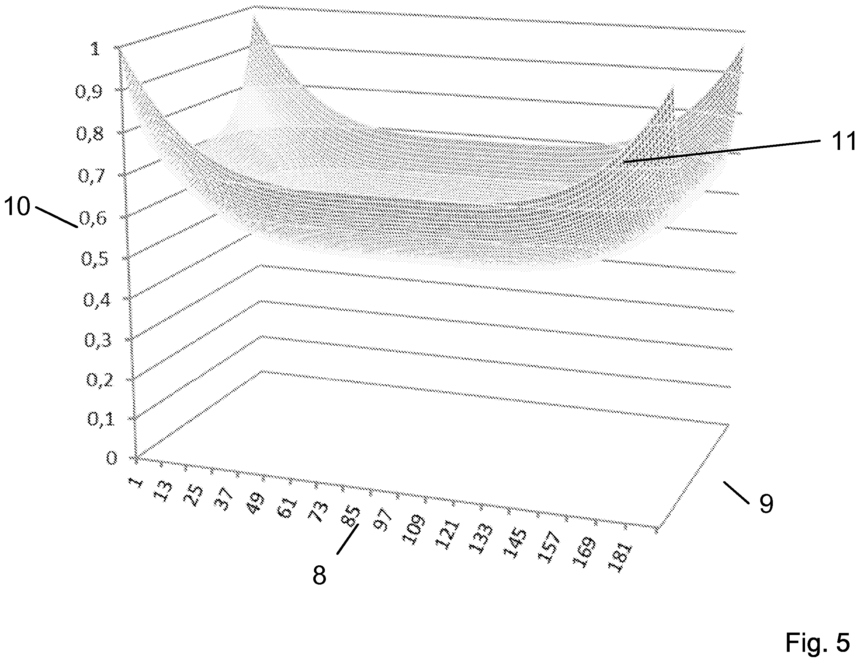

Fig. 5 zeigt die Korrekturfunktion, nämlich die Korrekturwerte in x- und y-Richtung, mit der die Helligkeitsdarstellung des Monitors korrigiert wird. Dazu werden die Grauwerte des Bildmusters, das am Monitor 1 dargestellt werden soll, multipliziert. Üblicherweise wird ein idealer Sinus dargestellt.

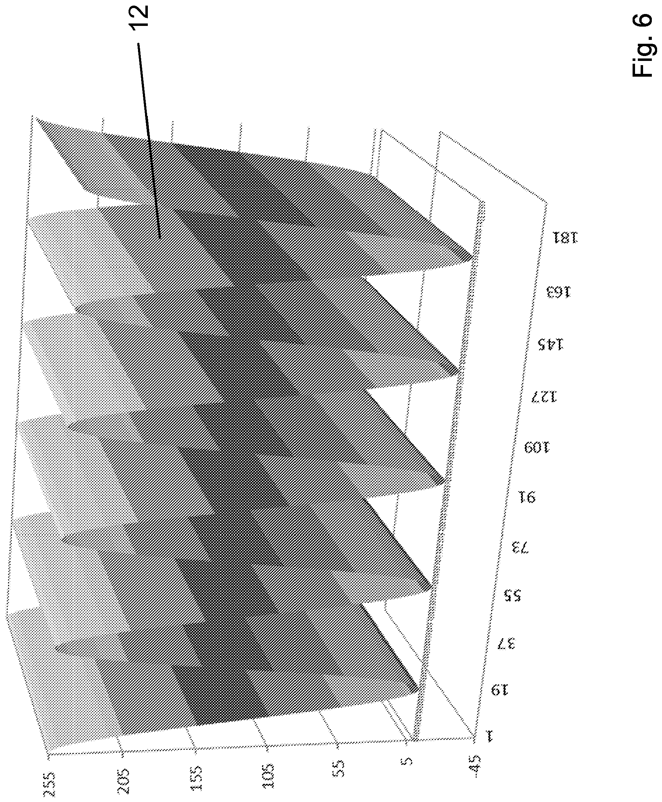

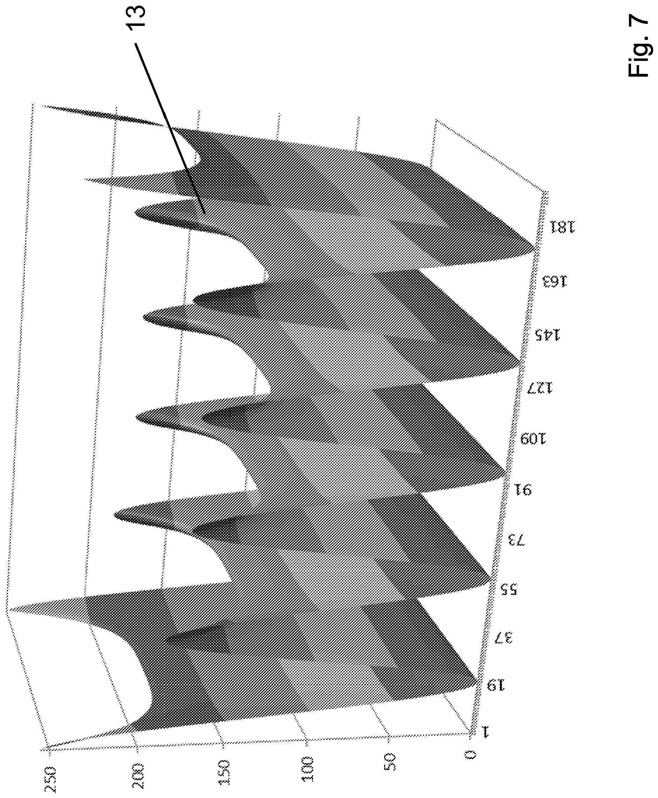

Fig. 6 zeigt die sinusförmigen Streifen 12, die sich über die Höhe des Monitors 1 erstrecken (Sinusmuster in x-Richtung, konstante Helligkeit in y-Richtung). Nach Korrektur erhält man eine über die Fläche des Monitors 1 angepasste Sinuskurve 13 mit modifizierten Grauwerten wie in Fig. 7 dargestellt. Die maximale Helligkeit in der Mitte wird gegenüber den Ecken abgeschwächt. Resultat ist dann eine über die Fläche des Monitors 1 gleichmäßige Helligkeitsverteilung des Bildmusters.

Durch die beschriebene Art der Bestimmung des Korrekturpolynoms wird zunächst nur die ungleichmäßige Helligkeitsverteilung des Monitors 1 ausgeglichen. Der zusätzliche Effekt, verursacht durch die winkelabhängige Helligkeitsabstrahlung des Monitors 1, kann durch eine Überkompensation der Helligkeitsverteilung reduziert werden, d.h. anstatt die Faktoren so zu bestimmen, dass die Mitte gleich hell wie die Ecken dargestellt werden, können die Ecken auch bewusst heller als die Mitte dargestellt werden. Dies ist insbesondere bei Monitoren 1 neuerer Bauart möglich, bei denen der Helligkeitsabfall in den Ecken nur ca. 25% beträgt.

Durch eine Überkorrektur der Helligkeitsverteilung des Monitors 1 kann an den Monitorecken das Signal verbessert werden, ohne dass sich dadurch die Gefahr der Übersättigung in der Monitormitte ergibt. Im analysierten Beispiel könnte die Belichtungszeit sogar nochmals erhöht werden.

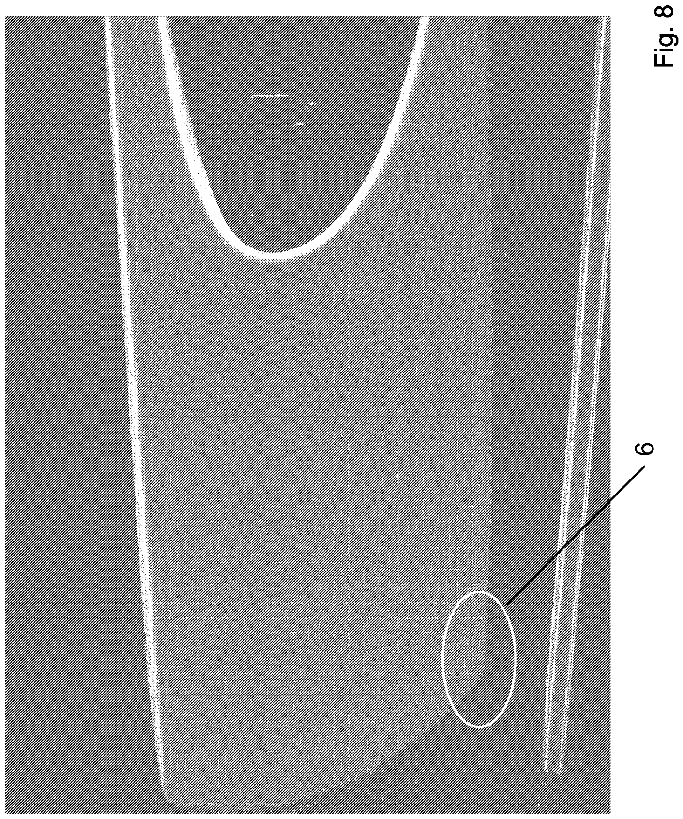

Die Verbesserung schlägt sich in einem deutlich reduzierten Rauschen an den kritischen Bereichen nieder, wie dies in Fig. 8 dargestellt ist. In dem zweiten Bereich 6 erhält man dadurch eine ebenfalls homogene, unverrauschte bzw lückenlose Verteilung der Messwerte.

In ganz analoger Weise könnte die blickwinkelabhängige Helligkeitsverteilung kompensiert werden. Dazu könnten der Azimut- und der Polarwinkel, unter dem die Kamera 3 die spiegelnde Oberfläche des Messobjekts 2 betrachtet, als Korrekturfunktion herangezogen werden. Anstelle der dazu notwendigen Kreisfunktionen Sinus und Kosinus (bzw. Tangens) könnte als Korrekturfunktion in einer ersten Näherung auch eine lineare Funktion nur abhängig von der Breite bzw. Höhe des Monitors 1 verwendet werden. Weitere Korrekturfunktionen z.B. unter Heranziehung der LUT ergeben sich in ganz analoger Weise.

Im Folgenden werden die mathematischen Grundlagen der phasenmessenden Deflektometrie erläutert, welche ein Ausführungsbeispiel des erfindungsgemäßen Verfahrens darstellt.

Erweiterte Auswertung der phasenschiebenden Deflektometrie

Unabhängig von der Anzahl k der äquidistanten Stützstellen, mit denen die Sinustreifen abgetastet werden (k>2), werden pro Pixel (x,y) drei unabhängige Informationen ausgewertet (siehe Formeln). Dazu werden z.B. vier Bilder ($I_k$ mit k=1..4) aufgenommen, wobei die Streifen jeweils die äquidistante Phasenlänge $\psi_k$ haben (Phasenverschiebung 90°). Aus diesen Bildern ($I_k(x,y)$) lassen sich folgende Bilder berechnen:

Phasenbild:

$$\varphi(x,y) = atan2\left[-(I_2 - I_4), (I_1 - I_3)\right] \qquad \text{Formel 1}$$

Das Punkt für Punkt gewonnene Phasenbild ergibt Informationen über die Objektneigung. Das sogenannte 'Neigungsbild' ist für die Beurteilung einer Vielzahl von Oberflächenfehlern wie z.B. Dellen, Beulen und Lackläufern geeignet. Durch Differenzieren entsteht aus dem 'Neigungsbild' ein 'Krümmungsbild', in welchem insbesondere kleinräumige geometrische Fehler mit ausgeprägten Kanten gut sichtbar sind. Beispiele hierzu sind Lunker, Pickel, Kerben und Kratzer.

Grauwertbild:

$$I_0(x,y) = {}^1/_4 (I_1 + I_2 + I_3 + I_4) \qquad \text{Formel 2}$$

Der zweite Informationskanal, das Grauwertbild, ist durch seine Synthese aus den phasenverschobenen Grundbildern besonders rauscharm.

Modulations- oder Kontrastbild (m, normierte Amplitude bezogen auf das Grauwertbild:

$$m(x,y) = \frac{a(x,y)}{\ldots} = \frac{\sqrt{(I_1-I_3)^2+(I_2-I_4)^2}}{\ldots} \qquad \text{Formel 3}$$

mit der Amplitude

$$a(x,y) = \sqrt{(I_1 - I_3)^2 + (I_2 - I_4)^2} \qquad \text{Formel 4}$$

Der dritte Informationskanal, das Modulationsbild zeigt an, wie stark die Sinusschwingung an einem bestimmten Punkt auftritt und repräsentiert den lokalen Glanzgrad einer Oberfläche. Diese Darstellung liefert wichtige Hinweise über matte Stellen, wie sie z.B. bei Schmutz, Kratzern und Beschichtungsfehlern auftreten.

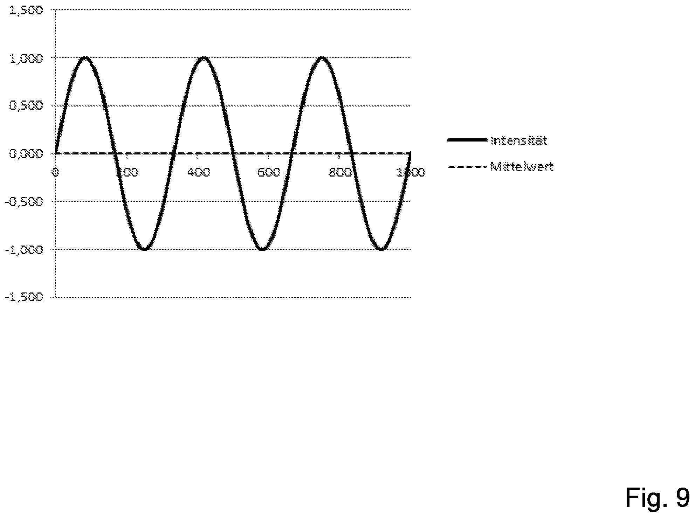

Fig. 9 zeigt eine sinusförmige Intensitätsverteilung über die Breite eines Monitors 1 mit 1000 Pixeln. Die Monitorbreite ist dabei ein ganzzahliges Vielfaches des Sinusverlaufs, was dazu führt, dass der Mittelwert der Helligkeit (in Fig. 9 normiert auf +/- 1) über die komplette Breite des Monitors 1 exakt Null ergibt.

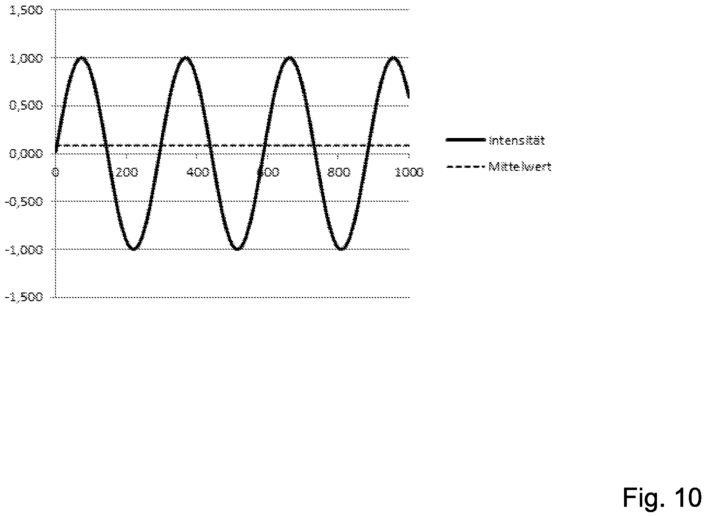

Fig. 10 zeigt eine nicht angepasste sinusförmige Intensitätsverteilung über die Breite eines Monitors 1. Die Monitorbreite ist nunmehr kein ganzzahliges Vielfaches des Sinusverlaufs, was dazu führt, dass der Mittelwert der Helligkeit über die komplette Breite des Monitors 1 ungleich Null ist.

Der Mittelwert der Helligkeit trägt insbesondere auf partiell reflektierenden, auch diffus streuenden Objektoberflächen dazu bei, dass eine unterschiedliche Grundhelligkeit in den einzelnen Bildaufnahmen entsteht. Der reflektierte Anteil des Lichts (im Wesentlichen das ursprüngliche Sinusmuster) wird additiv durch den diffus streuenden Anteil (im Wesentlichen die mittlere Helligkeit des dargestellten Musters) überlagert.

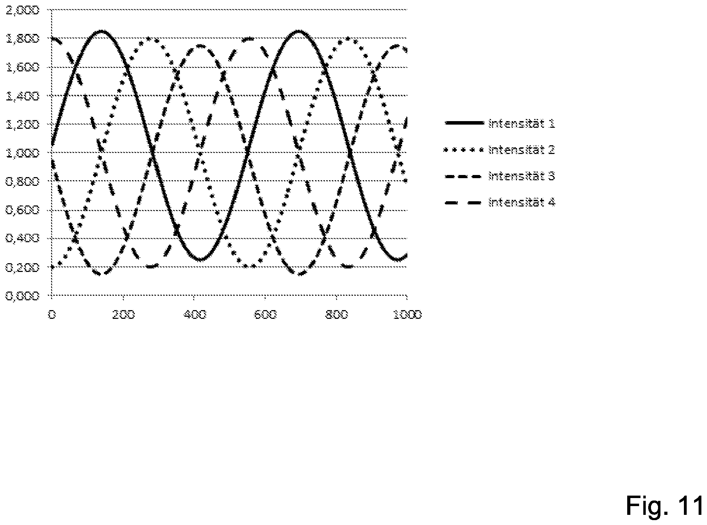

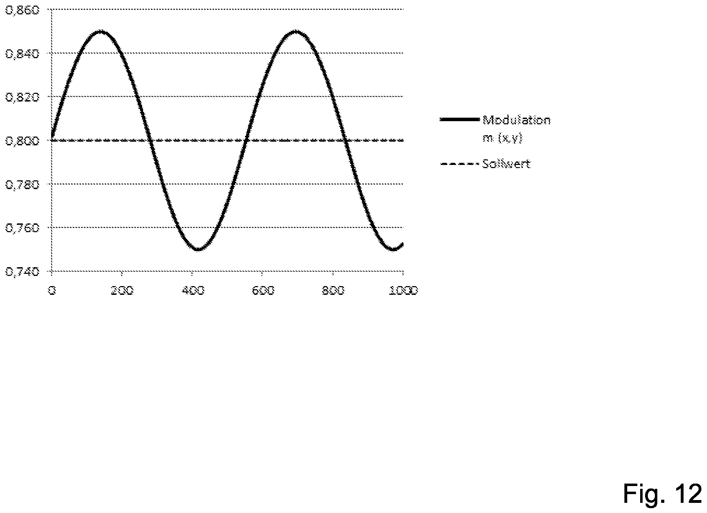

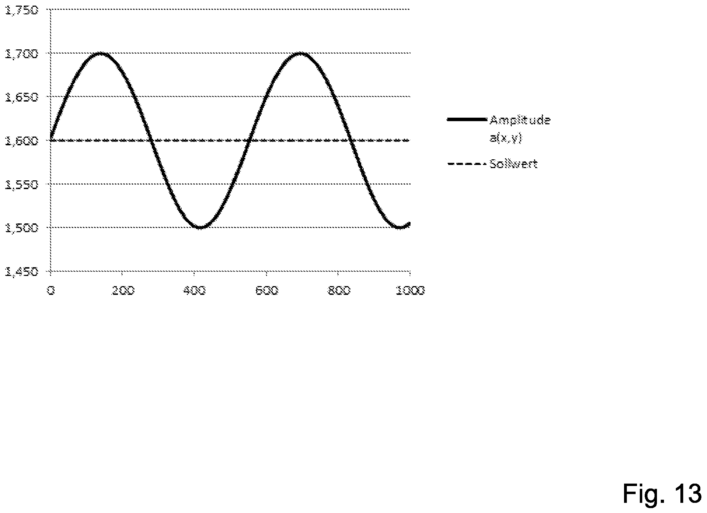

Fig. 11 zeigt vier nicht auf die Monitorbreite angepasste sinusförmige Intensitätsverteilungen nach Reflexion an der Oberfläche des Messobjektes 2 (d.i. im Prinzip das von der Kamera 3 aufgenommene Bild). Die sinusförmigen Intensitätsverteilungen sind jeweils um 90° in der Phase versetzt, wie dies bei der phasenmessenden Deflektometrie der Fall ist. Durch das Prinzip des Phasenschiebens werden nun in den einzelnen Aufnahmen unterschiedliche Teile des Sinusverlaufs dargestellt. Der in der Fig. 10 dargestellte Effekt führt zunächst zu unterschiedlichen mittleren Helligkeiten der einzelnen Sinusmuster über die Monitorbreite. Durch die Überlagerung mit dem diffusen Anteil der Reflexion führt dies für jedes Bildmuster zu einem mittleren Offset in der Helligkeit. Dies führt zu einer Modulation der Helligkeit im resultierenden Modulationsbild (Formel 3) bzw. Amplitudenbild (Formel 4). Bei angepasster Sinusdarstellung würde das Modulationsbild bzw. das Amplitudenbild eine konstante Helligkeit aufweisen. In Formel 3 bzw. 4 sind die Intensitäten der vier Bilder $I_1$ bis $I_4$ enthalten. Durch Addition von vier jeweils um 90° phasenversetzten, an die Breite angepassten Sinuskurven würde ein konstanter Wert (über die Breite) des Monitors 1 resultieren. In den Figuren 12 und 13 wird dies durch die gestrichelte Linie dargestellt. Durch die fehlende Anpassung resultiert jedoch eine sinusförmige Grundmodulation (Fig. 12 für das Modulationsbild, Fig. 13 für das Amplitudenbild), die durch die nicht vorteilhafte Wahl der Sinusmuster im Zusammenspiel mit dem diffus streuenden Anteil der zu messenden Oberfläche hervorgerufen wird und einer Fehlinterpretation der gewonnen Messdaten führt.

Durch eine Korrekturfunktion, mit der die Sinusdarstellung an die Monitorbreite angepasst wird, kann somit der unerwünschte Effekt vermieden werden. Die voranstehenden Ausführungen gelten in ganz analoger Weise auch für die Höhe des Monitors 1.

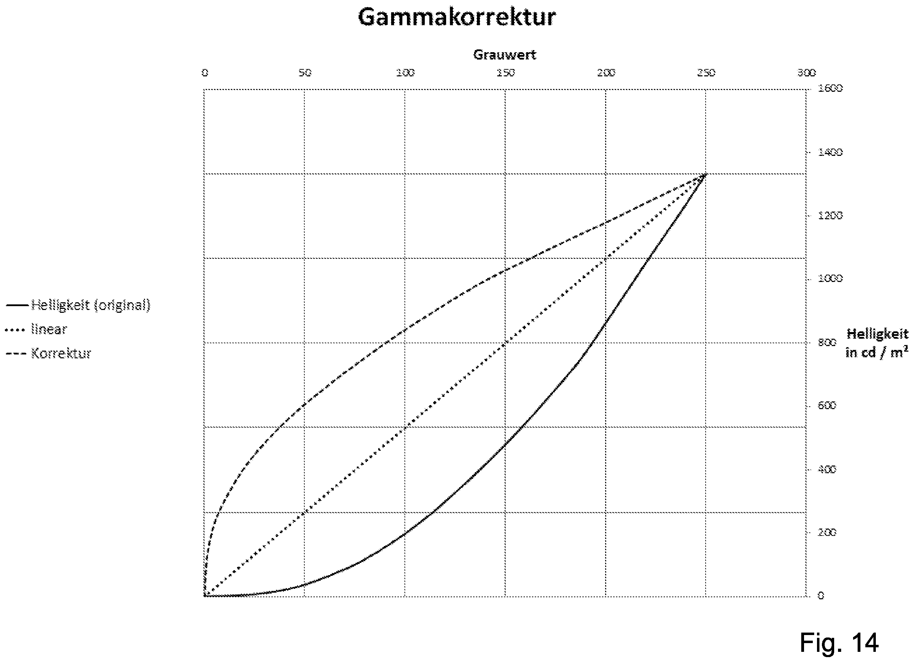

Fig. 14 zeigt das Gamma eines handelsüblichen Monitors 1 (durchgezogene Linie). Mit einer geeignet gewählten Korrekturfunktion (lang gestrichelte Linie) für die Helligkeitsdarstellung am Monitor 1 kann ein linearer Helligkeitseindruck am resultierenden Bild eingestellt werden (kurzgestrichelte Linie).

Hinsichtlich weiterer vorteilhafter Ausgestaltungen des erfindungsgemäßen Verfahrens und der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele des erfindungsgemäßen Verfahrens der erfindungsgemäßen Vorrichtung lediglich zur Erörterung der beanspruchten Lehre dienen, diese jedoch nicht auf die Ausführungsbeispiele einschränken.

**Bezugszeichenliste**

1    Bilderzeugungseinrichtung

| | |
|---|---|
| 2 | Messobjekt |
| 3 | Erfassungseinrichtung |
| 4 | Korrektureinheit |
| 5 | erster Bereich |
| 6 | zweiter Bereich |
| 7 | Sichtstrahl |
| 8 | Breite |
| 9 | Höhe |
| 10 | z-Achse |
| 11 | Graustufen |
| 12 | Streifen |
| 13 | angepasste Sinuskurve |

**Patentansprüche**

**1.** Verfahren zur optischen Oberflächenvermessung eines Messobjektes (2), wobei mit einer Bilderzeugungseinrichtung (1), welche einen Projektor und/oder einen Monitor und/oder einen Schirm aufweist, ein Bildmusters dargestellt und das Messobjekt mit diesem erzeugten Bildmuster bestrahlt wird und wobei das von dem Messobjekt durch Reflexion, Streuung, Beugung und/oder Transmission beeinflusste Bildmuster mit einer Erfassungseinrichtung (3) aufgenommen wird, wobei mittels einer Korrekturfunktion die Bilderzeugungseinrichtung (1) und somit das dargestellte Bildmuster derart angepasst wird, dass das von der Erfassungseinrichtung (3) aufgenommene, beeinflusste Bildmuster zeitlich und/oder örtlich eine zumindest im Wesentlichen konstante und/oder homogene und/oder lineare Helligkeit aufweist,

**dadurch gekennzeichnet, dass** mittels der Korrekturfunktion eine inhomogene Helligkeitsverteilung der Bilderzeugungseinrichtung (1) korrigiert wird, so dass die Bildmusterdarstellung eine über die Fläche der Bilderzeugungseinrichtung homogene Verteilung aufweist,
oder dass mittels der Korrekturfunktion die Grauwertverteilung und/oder Farbverteilung einer Serie von mehreren nacheinander dargestellten Bildmustern derart angepasst wird, dass die dargestellten Bildmuster jeweils zumindest im Wesentlichen eine gleiche Gesamthelligkeit aufweisen.

**2.** Verfahren nach Anspruch 1, **dadurch gekennzeichnet, dass** mittels der Korrekturfunktion die Gammakorrektur der Bilderzeugungseinrichtung (1) an die Gammakorrektur der Erfassungseinrichtung (3) angepasst wird.

**3.** Verfahren nach Anspruch 1 oder 2, **dadurch gekennzeichnet, dass** mittels der Korrekturfunktion eine bauartbedingte inhomogene Helligkeitsverteilung der Bilderzeugungseinrichtung (1) korrigiert wird.

**4.** Verfahren nach einem der Ansprüche 1 bis 3, **dadurch gekennzeichnet, dass** mittels der Korrekturfunktion durch seitliche Sichtstrahlen (7) hervorgerufene Inhomogenitäten des von der Bilderzeugungseinrichtung (1) dargestellten Bildmusters korrigiert werden.

**5.** Verfahren nach einem der Ansprüche 1 bis 4, **dadurch gekennzeichnet, dass** mittels der Korrekturfunktion die geometrische Anordnung des dargestellten Bildmusters auf bzw. an der Bilderzeugungseinrichtung (1) angepasst wird.

**6.** Verfahren nach einem der Ansprüche 1 bis 5, **dadurch gekennzeichnet, dass** als Korrekturfunktion eine Lookup-Tabelle verwendet wird.

**7.** Verfahren nach einem der Ansprüche 1 bis 6, **dadurch gekennzeichnet, dass** als Korrekturfunktion eine beliebige mathematische Funktion verwendet wird.

**8.** Verfahren nach Anspruch 7, **dadurch gekennzeichnet, dass** der Korrekturfunktion eine lineare Funktion überlagert wird.

**9.** Verfahren nach einem der Ansprüche 1 bis 8, **dadurch gekennzeichnet, dass** die Korrekturfunktion räumlich in ein oder in zwei Achsen wirkt und/oder dass die Korrekturfunktion zeitlich variiert.

10. Verfahren nach einem der Ansprüche 1 bis 9, **dadurch gekennzeichnet, dass** die Erfassungseinrichtung (3) eine Kamera aufweist.

11. Vorrichtung zur Durchführung des Verfahrens nach einem der Ansprüche 1 bis 10, umfassend eine Bilderzeugungseinrichtung (1) mit einem Projektor und/oder einem Monitor und/oder einem Schirm zur Darstellung eines Bildmusters und eine Erfassungseinrichtung (3) zur Aufnahme des von dem Messobjekt (2) durch Reflexion, Streuung, Beugung und/oder Transmission beeinflussten Bildmusters, wobei die Bilderzeugungseinrichtung (1) eine Korrektureinheit (4) aufweist, die über eine Korrekturfunktion das dargestellte Bildmuster derart anpasst, dass das von der Erfassungseinrichtung (3) aufgenommene, beeinflusste Bildmuster zeitlich und/oder örtlich eine zumindest im Wesentlichen konstante und/oder homogene und/oder lineare Helligkeit aufweist,
**dadurch gekennzeichnet , dass** die Korrektureinheit (4) mittels der Korrekturfunktion eine inhomogene Helligkeitsverteilung der Bilderzeugungseinrichtung (1) korrigiert, so dass die Bildmusterdarstellung eine über die Fläche der Bilderzeugungseinrichtung (1) homogene Verteilung aufweist oder dass die Korrektureinheit (4) mittels der Korrekturfunktion die Grauwertverteilung und/oder Farbverteilung einer Serie von mehreren nacheinander dargestellten Bildmustern derart angepasst, dass die dargestellten Bildmuster jeweils zumindest im Wesentlichen eine gleiche Gesamthelligkeit aufweisen.

**Claims**

1. Method for optical surface measurement of a measurement object (2), wherein using an image generation device (1) which has a projector and/or a monitor and/or a screen, an image pattern is displayed and the measurement object is irradiated with this image pattern produced, and wherein the image pattern influenced by the measurement object by means of reflection, scattering, diffraction and/or transmission is recorded by means of a detection device (3), wherein, by means of a correction function, the image generation device (1) and consequently the image pattern displayed is adapted in such a manner that the influenced image pattern recorded by the detection device (3) temporally and/or locally has an at least substantially constant and/or homogeneous and/or linear brightness,

   **characterised in that**, by means of the correction function, a non-homogeneous brightness distribution of the image generation device (1) is corrected so that the image pattern display has a distribution which is homogeneous over the surface of the image generation device,
   or **in that**, by means of the correction function, the grey scale value distribution and/or colour distribution of a series of several image patterns which are displayed one after the other is adapted in such a manner that the image patterns displayed in each case at least substantially have a uniform overall brightness.

2. Method according to claim 1, **characterised in that**, by means of the correction function, the gamma correction of the image generation device (1) is adapted to the gamma correction of the detection device (3).

3. Method according to claim 1 or 2, **characterised in that**, by means of the correction function, a structural-type-related, non-homogeneous brightness distribution of the image generation device (1) is corrected.

4. Method according to any one of claims 1 to 3, **characterised in that**, by means of the correction function, occurrences of non-homogeneity, which are brought about by lateral viewing lines (7), of the image pattern displayed by the image generation device (1) are corrected.

5. Method according to any one of claims 1 to 4, **characterised in that**, by means of the correction function, the geometric arrangement of the displayed image pattern on or at the image generation device (1) is adapted.

6. Method according to any one of claims 1 to 5, **characterised in that** a look-up table is used as the correction function.

7. Method according to any one of claims 1 to 6, **characterised in that** any mathematical function is used as the correction function.

8. Method according to claim 7, **characterised in that** a linear function is superimposed on the correction function.

9. Method according to any one of claims 1 to 8, **characterised in that** the correction function acts spatially in one or two axes and/or **in that** the correction function varies temporally.

10. Method according to any one of claims 1 to 9, **characterised in that** the detection device (3) has a camera.

11. Apparatus for carrying out the method according to any one of claims 1 to 10, comprising an image generation device (1) having a projector and/or a monitor and/or a screen for displaying an image pattern and a detection device (3) for recording the image pattern influenced by the measurement object (2) by means of reflection, scattering, diffraction and/or transmission, wherein the image generation device (1) has a correction unit (4) which, by means of a correction function, adapts the image pattern displayed in such a manner that the influenced image pattern recorded by the detection device (3) temporally and/or locally has an at least substantially constant and/or homogeneous and/or linear brightness,

**characterised in that** the correction unit (4), by means of the correction function, corrects a non-homogeneous brightness distribution of the image generation device (1) so that the image pattern display has a distribution which is homogeneous over the surface of the image generation device (1), or **in that** the correction unit (4) by means of the correction function adapts the grey scale value distribution and/or colour distribution of a series of several image patterns which are displayed one after the other in such a manner that the image patterns displayed in each case at least substantially have a uniform overall brightness.

**Revendications**

1. Procédé de mesure optique d'une surface d'un objet à mesurer (2), dans lequel, avec un dispositif de production d'image (1), qui comprend un projecteur et/ou un moniteur et/ou un écran, représente un motif d'image et l'objet à mesurer est irradié avec de motif d'image produit et dans lequel le motif d'image, influencé par l'objet à mesurer par réflexion, diffusion, diffraction et/ou transmission, est enregistré avec un dispositif d'enregistrement (3), dans lequel, au moyen d'une fonction de correction, le dispositif de production d'image (1) et donc le motif d'image représenté est adapté de sorte que le motif d'image influencé, enregistré par le dispositif d'enregistrement (3) présente, de manière temporelle et/ou localement une luminosité au moins globalement constante et/ou homogène et/ou linéaire,

**caractérisé en ce que**, au moyen de la fonction de correction, une répartition de luminosité inhomogène du dispositif de production d'image (1) est corrigée, de sorte que la représentation du motif d'image présente une répartition homogène sur la surface du dispositif de production d'image,

ou **en ce que**, au moyen de la fonction de correction, la répartition des niveaux de gris et/ou la répartition des couleurs d'une série de plusieurs motifs d'image représentés successivement est adaptée de sorte que les motifs d'images représentés présentent chacun au moins globalement une luminosité totale égale.

2. Procédé selon la revendication 1, **caractérisé en ce que**, au moyen de la fonction de correction, la correction gamma du dispositif de production d'image (1) est adaptée à la correction gamma du dispositif d'enregistrement (3).

3. Procédé selon la revendication 1 ou 2, **caractérisé en ce que**, au moyen de la fonction de correction, une répartition de luminosité inhomogène, due à la conception, du dispositif de production d'image (1), est corrigée.

4. Procédé selon l'une des revendications 1 à 3, **caractérisé en ce que**, au moyen de la fonction de correction, les inhomogénéités provoquées par des rayons visibles latéraux (7), du motif d'image représenté par le dispositif de production d'image (1), sont corrigées.

5. Procédé selon l'une des revendications 1 à 4, **caractérisé en ce que**, au moyen de la fonction de correction, la disposition géométrique du motif d'image représenté est adapté sur ou au niveau du dispositif de production d'image (1).

6. Procédé selon l'une des revendications 1 à 5, **caractérisé en ce que** la fonction de correction utilisée est une table de correspondance.

7. Procédé selon l'une des revendications 1 à 6, **caractérisé en ce que** la fonction de correction utilisée est une fonction mathématique quelconque.

8. Procédé selon la revendication 7, **caractérisé en ce que**, à la fonction de correction, est superposée une fonction linéaire.

9. Procédé selon l'une des revendications 1 à 8, **caractérisé en ce que** la fonction de correction agit dans l'espace dans un ou dans deux axes et/ou **en ce que** la fonction de correction varie dans le temps.

10. Procédé selon l'une des revendications 1 à 9, **caractérisé en ce que** le dispositif d'enregistrement (3) comprend une caméra.

11. Dispositif d'exécution du procédé selon l'une des revendications 1 à 10, comprenant un dispositif de production d'image (1) avec un projecteur et/ou un moniteur et/ou un écran pour al représentation d'un motif d'image et un dispositif d'enregistrement (3) pour le logement du motif d'image influencé par l'objet à mesurer (2) par réflexion, diffusion, diffraction et/ou transmission, dans lequel le dispositif de production d'image (1) comprend une unité de correction (4) qui adapte, par l'intermédiaire d'une fonction de correction le motif d'image représenté, de sorte que le motif d'image influencé enregistré par le dispositif d'enregistrement (3) présente, de manière temporelle et/ou localement, une luminosité au moins globalement constante et/ou homogène et/ou linéaire, **caractérisé en ce que** l'unité de correction (4) corrige, au moyen de la fonction de correction, une répartition de luminosité inhomogène du dispositif de production d'image (1) de sorte que la représentation du motif d'image présente une répartition homogène sur la surface du dispositif de production d'image (1) ou **en ce que** l'unité de correction (4) adapte, au moyen de la fonction de correction, la répartition des niveaux de gris et/ou la répartition des couleurs d'une série de plusieurs motifs d'image représentés successivement de sorte que les motifs d'image représentés présentent chacun au moins globalement une luminosité totale égale.

Fig. 1

Fig. 2

Fig. 3

Fig. 4

Fig. 5

Fig. 6

Fig. 7

Fig. 8

6

Fig. 9

Fig. 10

Fig. 11

Fig. 12

24

Fig. 13

# Gammakorrektur

Grauwert

— Helligkeit (original)
···· linear
--- Korrektur

Helligkeit
in cd / m²

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **L. MIAO et al.** An accurate projector gamma correction method for phase-measuring profilometry based on direct optical power detection. *VISUAL COMMUNICATIONS AND IMAGE PROCESSING,* 10. August 2015, 96771D-96771D

- **M. DAI et al.** Single-shot color fringe projection for three-dimensional shape measurement of objects with discontinuities. *APPLIED OPTICS, OPTICAL SOCIETY OF AMERICA,* 20. April 2012, (12), 2062-2069
- **T. HOANG et al.** Generic gamma correction for accuracy enhancement in fringe-projection profilometry. *OPTICS LETTERS,* 15. Juni 2010, (12), 1992-1994